(19) Europäisches Patentamt / European Patent Office / Office européen des brevets

(11) **EP 4 370 423 B1**

(12) **FASCICULE DE BREVET EUROPEEN**

(45) Date de publication et mention
de la délivrance du brevet:
**22.01.2025  Bulletin 2025/04**

(21) Numéro de dépôt: **22789648.7**

(22) Date de dépôt: **20.09.2022**

(51) Classification Internationale des Brevets (IPC):
**B64G 1/32** *(2006.01)*       **B64G 1/24** *(2006.01)*

(52) Classification Coopérative des Brevets (CPC):
**B64G 1/32; B64G 1/244**

(86) Numéro de dépôt international:
**PCT/FR2022/051767**

(87) Numéro de publication internationale:
**WO 2023/047049 (30.03.2023 Gazette 2023/13)**

(54) **DISPOSITIF DE CONTRÔLE DE VITESSE ANGULAIRE D'UN ENGIN SPATIAL ET ENGIN SPATIAL CORRESPONDANT**

VORRICHTUNG ZUR STEUERUNG DER WINKELGESCHWINDIGKEIT EINES RAUMFAHRZEUGS UND ZUGEHÖRIGES RAUMFAHRZEUG

DEVICE FOR CONTROLLING THE ANGULAR VELOCITY OF A SPACECRAFT, AND CORRESPONDING SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2021  FR 2110081**

(43) Date de publication de la demande:
**22.05.2024  Bulletin 2024/21**

(73) Titulaire: **Airbus Defence and Space SAS
31402 Toulouse Cedex 4 (FR)**

(72) Inventeurs:
• **BOYER, Laurent
Toulouse cedex 31402 (FR)**
• **LAGADEC, Kristen
31402 Toulouse cedex 4 (FR)**

(74) Mandataire: **Ipside
6, Impasse Michel Labrousse
31100 Toulouse (FR)**

(56) Documents cités:
EP-A1- 0 087 628     US-A- 3 526 795
US-A- 4 062 509      US-B1- 6 191 513

## Description

### Domaine de l'invention

Le domaine de l'invention est celui du contrôle d'attitude d'engins spatiaux, tels que des satellites.

L'invention se rapporte plus particulièrement à un dispositif de contrôle de vitesse angulaire d'un engin spatial hors service.

L'invention a ainsi des applications, notamment, mais non exclusivement, pour tous les engins spatiaux pour lesquels une opération de retrait en fin de vie doit être envisagée.

### Art antérieur et ses inconvénients

Les engins spatiaux hors service contribuent à l'accumulation de débris spatiaux. La présence dans l'espace de tels débris spatiaux est problématique car elle constitue une pollution dans la mesure où les débris en question suivent des trajectoires qui peuvent croiser l'orbite d'engins spatiaux fonctionnels, ce qui crée des risques de collision. En outre, les collisions de débris entre eux augmentent le nombre total de débris, ce qui accentue encore plus le risque de collision pour les engins fonctionnels.

Dans ce cadre, la réglementation prévoit qu'il ne faut pas laisser un satellite hors service en orbite plus de 25 ans. Si un tel satellite vole à une hauteur supérieure à environ 600 km, la traînée atmosphérique ne suffit pas à le faire tomber sur Terre. Ainsi, soit un tel satellite est configuré pour descendre par ses propres moyens soit, s'il tombe en panne avant de pouvoir le faire, il faudra qu'un autre engin spatial le rejoigne pour le faire descendre sur Terre.

Cependant, même dans le cas d'un satellite en orbite suffisamment basse pour que la traînée atmosphérique suffise à le faire tomber sur Terre, il convient de vérifier qu'aucun risque n'est associé à une telle retombée. Par exemple, si le satellite contient trop de pièces susceptibles de survivre à la rentrée atmosphérique (acier, titane, céramiques), cela pourrait représenter un risque au sol si le satellite venait à rentrer passivement (i.e. n'importe où). Il faut alors que le satellite soit capable d'effectuer une rentrée dite contrôlée nécessitant significativement plus d'ergols et des opérations plus délicates.

Aussi, afin de capturer et désorbiter un débris spatial tel qu'un satellite décommisionné, on connaît des engins spatiaux adaptés à réaliser des manœuvres telles que s'amarrer au débris, de sorte à former un composite, comme par exemple des satellites désorbiteurs tels que ceux décrits dans les demandes EP2746163 et EP2671804. On comprend néanmoins que la vitesse de rotation du satellite hors service reste un facteur limitant de réussite de la phase de capture pour de telles missions. Il est en effet fréquent qu'un satellite hors service soit animé d'une vitesse angulaire importante, soit à cause d'une panne fatale ayant également interrompu la mission (panne de propulsion, collision avec un débris), soit à cause de l'accumulation de perturbations externes faibles (pression de radiation solaire) sur de longues durées. En outre, même dans le cas d'une capture réalisée avec succès, la suite immédiate des opérations pour le contrôle du composite est incompatible avec une grande vitesse de rotation, notamment lorsque le satellite hors service est relié au satellite désorbiteur par des liens souples, comme par exemple un harpon ou un filet.

On connait également le brevet EP3538441 qui enseigne un projectile comprenant une enceinte externe séparée par un fluide visqueux d'un corps interne aimanté.

On connaît le document brevet EP0087628 intitulé « Magnetic bearing wheel for an artificial satellite » de Mitsubishi electric.

On connaît le document brevet US3526795 intitulé « TORQUE REACTION ATTITUDE CONTROL DEVICE » de PECS WILLIAM.

On connaît le document brevet US6191513 intitulé « Stator-controlled magnetic bearing » de CHEN H MING.

On connaît le document brevet US4062509 intitulé « Closed loop roll/yaw control system for satellites » de MUHLFELDER LUDWIG.

Il existe d'une manière générale un besoin pour améliorer les techniques de contrôle d'un engin spatial hors service.

### Exposé de l'invention

L'invention concerne un dispositif de contrôle de vitesse angulaire d'un engin spatial hors service permettant de faciliter les opérations de retrait actif de l'engin spatial en tant que débris spatial. Un tel dispositif de contrôle de vitesse angulaire comprend un stator et un rotor mobile selon un axe de rotation par rapport au stator, le stator étant destiné à être entrainé par l'engin spatial à stabiliser, le rotor étant destiné à s'orienter selon le champ magnétique terrestre. Le stator comprend un corps électriquement conducteur et non-ferromagnétique tandis que le rotor comprend un système aimanté configuré pour induire, dans le stator, des courants de Foucault de freinage d'un mouvement relatif du rotor par rapport au stator.

Ainsi, l'invention propose une solution nouvelle et inventive pour contrôler l'attitude d'un engin spatial décommissionné (i.e. à bord duquel aucune source d'énergie n'est disponible). Ce but est atteint par un dispositif d'amortissement magnétique passif fixé à la structure de la plateforme, où un rotor équipé d'aimants est libre de tourner à l'intérieur d'un stator conducteur nonferromagnétique (i.e. de sorte à ne pas se magnétiser dans le temps). Les aimants du système aimanté sont placés en vis-à-vis du corps par exemple en aluminium. Même si l'engin spatial pivote, le rotor reste aligné avec le champ géomagnétique : la vitesse angulaire différentielle entre le rotor et la plateforme créé des courants de Foucault dans le stator et dissipe ainsi l'énergie cinétique de rotation, tendant à arrêter la rotation de l'engin spatial par rapport au champ magnétique terrestre.

Dans certains modes de réalisation, le rotor est guidé dans au moins un logement du stator, le rotor comprenant au moins un aimant coopérant avec au moins un contre-aimant disposé dans ledit logement du stator, de sorte à induire une sustentation magnétique du rotor par rapport au stator lorsque le dispositif de contrôle d'attitude est en microgravité et également lorsque le dispositif de contrôle d'attitude est en gravité terrestre. Deux aimants et contre-aimants agissent par exemple dans deux directions opposées et selon l'axe de rotation du rotor.

Ainsi, les frottements sont minimisés au niveau du contact entre le rotor et le stator.

Dans certains modes de réalisation, le dispositif de contrôle de vitesse angulaire comprend des moyens de maintien à distance de zones aimantées respectives du stator et du rotor, les moyens de maintien à distance étant agencés pour résister à des efforts au décollage et au largage. Ainsi, les aimants et les contre-aimants correspondants n'ont pas à supporter le poids du rotor, e.g. en présence de gravité ou lors d'accélérations (e.g. au lancement d'un satellite comprenant un tel dispositif).

Dans certains modes de réalisation, les moyens de maintien à distance comprennent au moins une bague du rotor et un épaulement du stator. La bague est destinée à coopérer avec l'épaulement disposé à distance et en vis-à-vis de la bague selon une direction axiale et selon une direction radiale. La bague peut venir en butée contre l'épaulement, par exemple lors d'accélération, garantissant ainsi le maintien à distance. L'épaulement est disposé de façon à garantir une distance minimale entre les zones aimantées respectives du stator et du rotor. Dans certains modes de réalisation, le rotor comprend des parties constituant un axe de pivot et un diaphragme flexible. La bague du rotor est mécaniquement reliée à l'axe de pivot par le diaphragme. La bague peut porter le système aimanté, tandis que l'axe de pivot porte la ou les paires d'aimants et contre-aimants.

Dans la présente invention, un satellite peut par exemple comprendre des aimants pour le freinage, des aimants pour l'orientation par rapport au champ magnétique terrestre et des aimants et contre aimants pour une sustentation de l'axe du rotor.

Ainsi, l'axe de pivot n'a pas à supporter la contrainte mécanique permettant de bloquer un mouvement de bascule de l'axe de pivot par rapport l'axe de rotation.

Dans certains modes de réalisation, le système aimanté comprend une pluralité d'aimants de freinage disposés selon un plan perpendiculaire à l'axe de rotation du rotor.

Dans certains modes de réalisation, les moments magnétiques des aimants de freinage se somment selon une composante non nulle dans le plan perpendiculaire à l'axe de rotation du rotor de façon à ce que les aimants de freinage permettent également une orientation du rotor selon le champ magnétique terrestre.

Une telle configuration permet de combiner la fonction boussole et la fonction induction des courants.

Dans certains modes de réalisation, les moments magnétiques de plusieurs des aimants de freinage sont sensiblement perpendiculaires au plan perpendiculaire à l'axe de rotation du rotor, de façon à ce que leur champ magnétique traverse le plan perpendiculaire à l'axe de rotation du rotor pour induire des courants de Foucault dans au moins deux zones du corps du stator situées en regard de part et d'autre du plan perpendiculaire à l'axe de rotation du rotor. Le stator présente par exemple un profil en U venant autour et de part et d'autre de la bague.

Ainsi, la quantité de courants induits par un aimant du rotor est doublée par rapport à une implémentation dans laquelle le moment magnétique de l'aimant est sensiblement parallèle au plan de rotation du rotor (i.e. perpendiculaire à l'axe de rotation du rotor).

Dans certains modes de réalisation, les moments magnétiques de plusieurs des aimants de freinage forment un angle oblique par rapport au dit plan perpendiculaire à l'axe de rotation du rotor.

Une telle configuration permet de combiner la fonction boussole et le doublement des courants induits.

L'invention concerne également un engin spatial comprenant un ou plusieurs dispositifs de contrôle de vitesse angulaire tel que décrit précédemment (selon l'un quelconque des modes de réalisation précités).

Dans certains modes de réalisation, l'engin spatial comprend en outre des moyens de contrôle d'attitude selon trois axes adaptés à stabiliser l'attitude de l'engin spatial en activité. Le ou les dispositifs de contrôle de vitesse angulaire de l'engin lorsqu'il sera hors service agissent simultanément aux moyens de contrôle d'attitude de l'engin spatial en activité et exercent une action négligeable par rapport à ces moyens de contrôle d'attitude de l'engin spatial en activité. Dans certains modes de réalisation, chaque dispositif de contrôle de vitesse angulaire est agencé de façon à ce que l'axe de rotation du rotor forme un angle inférieur ou égal à 45° avec un axe de plus grande inertie de l'engin spatial, tel que l'engin spatial hors service tende vers un mouvement de rotation autour de cet axe de plus grande inertie.

Un premier avantage de l'invention est de permettre la réduction de la vitesse angulaire du satellite à capturer, préalablement à sa capture qui est ainsi facilitée. La présente invention permet ainsi d'éviter qu'un satellite hors service soit animé d'une vitesse angulaire importante, soit à cause d'une panne fatale ayant causé l'interruption de la mission telle qu'une panne de propulsion, ou une collision avec un débris, soit à cause de l'accumulation de perturbations externes faibles causées par exemple par une pression de radiation solaire,

sur de longues durées.

## Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[Fig.1] représente un dispositif de contrôle de vitesse angulaire d'un engin spatial selon un exemple de réalisation de l'invention ;

[Fig.2] représente un dispositif de contrôle de vitesse angulaire d'un engin spatial selon un autre exemple de réalisation de l'invention ;

[Fig.3a] représente une configuration des aimants de freinage d'un dispositif de contrôle de vitesse angulaire d'un engin spatial selon un exemple de réalisation de l'invention ;

[Fig.3b] représente une configuration des aimants de freinage d'un dispositif de contrôle de vitesse angulaire d'un engin spatial selon un autre exemple de réalisation de l'invention ;

[Fig.4a] représente une vue détaillée d'une partie axiale d'un dispositif de contrôle de vitesse angulaire d'un engin spatial selon un exemple de réalisation de l'invention, lorsque le dispositif est soumis à une première contrainte mécanique ;

[Fig.4b] représente une vue détaillée de la partie axiale du dispositif de la [Fig.4a], lorsque le dispositif est soumis à une deuxième contrainte mécanique ;

[Fig.4c] représente une vue détaillée de la partie axiale du dispositif de la [Fig.4a], lorsque le dispositif est soumis à une troisième contrainte mécanique ;

[Fig.5] représente une vue en coupe axiale d'un dispositif de contrôle de vitesse angulaire d'un engin spatial équipé un diaphragme flexible selon un exemple de réalisation de l'invention ;

[Fig.6] représente un modèle simplifié d'un dispositif de contrôle de vitesse angulaire d'un engin spatial permettant de prédire la constante de temps de dérotation de l'engin spatial ;

[Fig.7] représente un engin spatial équipé de deux dispositifs de contrôle de vitesse angulaire selon un exemple de réalisation de l'invention.

## Description détaillée de modes de réalisation de l'invention

Le principe général de l'invention repose sur un dispositif de contrôle de vitesse angulaire d'un engin spatial permettant notamment de faciliter les opérations de retrait de l'engin spatial en tant que débris spatial. Un tel dispositif comprend un stator et un rotor mobile selon un axe de rotation par rapport au stator, le stator étant destiné à être entrainé par l'engin spatial à stabiliser, le rotor étant destiné à s'orienter selon le champ magnétique terrestre. Le stator comprend un corps électriquement conducteur et non-ferromagnétique tandis que le rotor comprend un système aimanté configuré pour induire, dans le stator, des courants de Foucault de freinage d'un mouvement relatif du rotor par rapport au stator. Le rotor se comporte comme une aiguille de boussole grâce à un biais de moment magnétique apporté par un aménagement asymétrique des polarités des aimants de freinage ou grâce à des aimants d'orientation dédiés. Ainsi, même en l'absence de source d'énergie à bord de l'engin spatial, le rotor reste aligné avec le champ magnétique terrestre (fonction boussole). La vitesse angulaire différentielle entre le rotor et l'engin spatial crée des courants de Foucault dans le stator et dissipe ainsi l'énergie cinétique de rotation, tendant à arrêter le mouvement de rotation de l'engin spatial par rapport au champ magnétique terrestre. La vitesse de rotation de l'engin spatial est ainsi contrôlée.

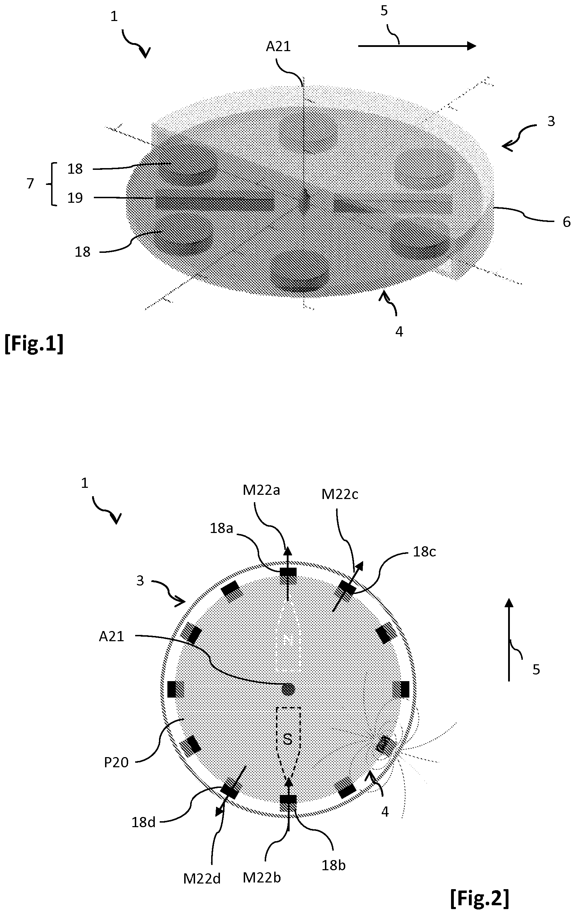

On présente désormais, en relation avec la **[Fig.1]** un dispositif 1 de contrôle de vitesse angulaire d'un engin 2 spatial selon un exemple de réalisation de l'invention.

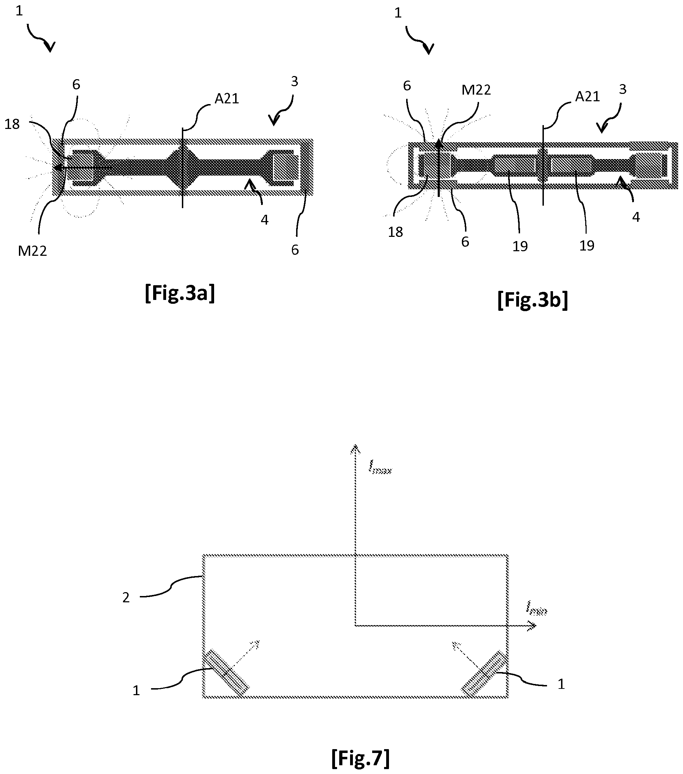

Comme décrit plus avant ci-dessous en relation avec la [Fig.7], le dispositif 1 selon l'invention permet notamment de contrôler la vitesse angulaire de l'engin 2 spatial lorsque ce dernier est hors service. Ceci permet par exemple de faciliter les opérations de retrait actif de l'engin 2 spatial en tant que débris spatial.

De retour à la [Fig.1], le dispositif 1 comprend un stator 3 et un rotor 4 mobile selon un axe A21 de rotation du rotor 4 par rapport au stator 3. Le stator est par exemple solidaire du bâti du satellite. Selon l'application au contrôle de la vitesse angulaire de l'engin 2 spatial, le stator 3 est destiné à être entrainé par l'engin 2 spatial à stabiliser. Le rotor 4 est quant à lui destiné à s'orienter selon le champ 5 magnétique terrestre.

Par ailleurs, le stator 3 comprend un corps 6 électriquement conducteur, par exemple en aluminium, tandis que le rotor 4 comprend un système aimanté 7 configuré pour induire, dans le stator 3, des courants de Foucault de freinage d'un mouvement relatif du rotor 4 par rapport au stator 3.

On obtient ainsi un dispositif d'amortissement magnétique passif destiné à être fixé à la structure de l'engin 2 spatial, où le rotor 4 équipé du système aimanté 7 est libre de tourner à l'intérieur d'un stator 3.

Le corps 6 du stator 3 est électriquement conducteur et non-ferromagnétique de sorte à ne pas se magnétiser dans le temps. Le corps 6 est par exemple en aluminium ou en cuivre.

Par ailleurs, selon l'exemple de réalisation de la [Fig.1], le système aimanté 7 comprend, d'une part, des aimants 18 de freinage et, d'autre part, des aimants 19 d'orientation. Les aimants 18 de freinage sont configurés pour induire, dans le stator 3, les courants de Foucault de freinage du mouvement relatif du rotor 4 par rapport au stator 3. Les aimants 19 d'orientation sont configurés pour maintenir l'orientation du rotor 4 par rapport au champ 5 magnétique terrestre (fonction boussole).

On présente désormais, en relation avec la **[Fig.2]** un dispositif 1 de contrôle de vitesse angulaire selon un autre exemple de réalisation de l'invention.

Selon l'exemple de réalisation de la [Fig.2], le système aimanté 7 comprend une pluralité d'aimants 18a, 18b, 18c, 18d de freinage disposés selon un plan P20 perpendiculaire à l'axe A21 de rotation du rotor 4 par rapport au stator 3.

Plus particulièrement, les moments magnétiques M22a et M22b des aimants 18a et 18b de freinage se somment selon une composante non nulle dans le plan P20 de façon à ce que les aimants 18a et 18b de freinage permettent également une orientation du rotor 4 selon le champ 5 magnétique terrestre.

Ainsi, dans cet exemple de réalisation, les aimants 18 de freinage remplissent la fonction des aimants 19 d'orientation (fonction boussole). Les aimants 18 de freinage et les aimants 19 d'orientation sont ici les mêmes aimants.

On présente désormais, en relation avec la **[Fig.3a]** une configuration des aimants 18 de freinage selon un exemple de réalisation de l'invention.

Plus particulièrement, les moments magnétiques M22 de plusieurs aimants 18 de freinage sont ici sensiblement parallèles au plan P20 perpendiculaire à l'axe A21 de rotation du rotor 4.

Dans une telle configuration radiale, le rayon de la trajectoire des courants de Foucault induits est maximisé dans le corps 6. La dissipation d'énergie est ainsi maximisée également.

Par ailleurs, les mêmes aimants 18 de freinage peuvent être utilisés pour assurer également la fonction d'orientation du rotor 4 par rapport au stator 3 comme décrit ci-dessus en relation avec la [Fig.2].

Selon une telle configuration des aimants 18 de freinage, il est également plus facile de contrôler la taille de l'entrefer entre les aimants 18 et le corps 6 du stator 3 (e.g. pour adresser la problématique des vibrations de lancement, du jeu libre dans le pivot du rotor 4) ou de loger des aimants 18 avec un rapport d'aspect plus grand (e.g. une hauteur plus grande des aimants 18 permet un entrefer plus important).

Par ailleurs, le boîtier du stator 3 peut être en une matière quelconque, par exemple en plastique, avec simplement une piste 6 en matériau non-ferromagnétique (e.g. en aluminium ou en cuivre) formant un logement ou disposé dans un logement réalisé dans le stator 3, en regard des aimants 18. Ce logement s'étend par exemple autour du stator avec un profil en U. Le stator comprend par exemple une bague cylindrique venant dans ce logement.

On présente désormais, en relation avec la **[Fig.3b]** une configuration des aimants 18 de freinage selon un autre exemple de réalisation de l'invention.

Plus particulièrement, les moments magnétiques M22 de plusieurs aimants 18 de freinage sont ici sensiblement perpendiculaires au plan P20. En d'autres termes, les moments magnétiques M22 des aimants 18 de freinage en question sont ici sensiblement parallèles à l'axe A21 de rotation du rotor 4.

Ainsi, le champ magnétique des aimants 18 de freinage traverse le plan P20 pour induire des courants de Foucault dans au moins deux zones du corps 6 du stator 3 situées en regard de part et d'autre du plan P20 en question. Les courants de Foucault ainsi induits sont potentiellement doublés par rapport à une configuration radiale des aimants 18 de freinage telle que décrite ci-dessus en relation avec la [Fig.3a]. Cependant, dans la configuration normale des aimants 18 de freinage de la [Fig.3b], les aimants 18 de freinage ne peuvent remplir en même temps la fonction d'orientation du rotor 4 par rapport au stator 3. Des aimants additionnels remplissant la fonction d'orientation du rotor 4 par rapport au stator 3 sont ici nécessaires, par exemple des aimants 19 d'orientation comme décrit ci-dessus en relation avec la [Fig.1].

Dans d'autres implémentations, les aimants additionnels remplissant la fonction d'orientation du rotor 4 par rapport au stator 3 sont d'autres aimants 18 de freinage en configuration radiale comme décrit ci-dessus en relation avec la [Fig.3a]. On obtient ainsi une configuration mixte avec certains aimants 18 de freinage en configuration normale et certains aimants 18 de freinage en configuration radiale.

Dans d'autres implémentations, les moments magnétiques M22 de plusieurs aimants 18 de freinage forment un angle oblique par rapport au plan P20 perpendiculaire à l'axe A21 de rotation du rotor 4. Par exemple, les moments magnétiques M22 en question forment un angle avec l'axe A21 de rotation du rotor 4 compris entre 10 degrés et 80 degrés, de préférence entre 30 degrés et 60 degrés. Dans une telle configuration, des courants de Foucault sont également induits de part et d'autre du plan P20 en question. Par ailleurs, une composante non nulle du moment magnétique total des aimants 18 de freinage peut ainsi être obtenue dans le plan P20 en question. De la sorte, les aimants 18 de freinage assurent également la fonction d'orientation du rotor 4 par rapport au stator 3 (fonction boussole).

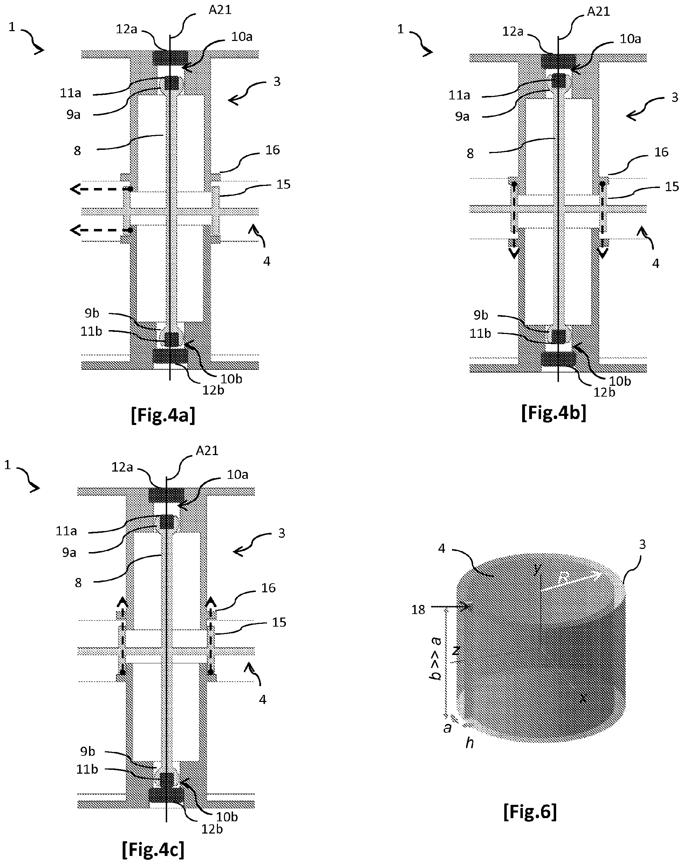

On présente désormais, en relation avec la **[Fig.4a],** la **[Fig.4b]** et la **[Fig.4c]** la partie axiale du dispositif 1 de contrôle de vitesse angulaire selon un exemple de réalisation de l'invention.

En pratique, le rotor 4 doit être ajusté au stator 3 avec suffisamment de précision pour que les aimants 18 de freinage se déplacent typiquement à moins de 1 mm du corps 6 du stator 3 sans jamais se toucher. Par ailleurs, les moyens d'ajustement du rotor 4 au stator 3 doivent induire le moins de frottements possible, de sorte que le rotor 4 soit toujours libre de tourner. Le frottement doit être une fraction du couple magnétique entraînant le rotor 4. Ceci n'est pas nécessairement un problème pour les conditions en orbite, lorsque les forces et les couples agissant sur le rotor 4 sont petits. Mais ce peut être un problème lors des essais au sol, afin de permettre le test du dispositif 1 avant mise en orbite.

Dans ce but, le rotor 4 est ici guidé dans un logement 10a, 10b correspondant du stator 3. Dans le présent exemple de réalisation, ce sont les deux extrémités d'un axe 4 de pivot du rotor 4 qui sont guidées dans un logement 10a, 10b correspondant du stator 3. Dans d'autres exemples de réalisation, le rotor 4 ne comprend pas d'axe 4 de pivot en tant que tel. Dans ce cas, ce sont par exemple des rotules disposées le long de l'axe A21 de rotation et destinées à être guidées chacune avec un logement correspondant du stator 3.

De retour aux [Fig.4a], la [Fig.4b] et la [Fig.4c], chaque extrémité de l'axe 8 de pivot comprend un (ou plusieurs) aimant 11a, 11b coopérant avec un (ou plusieurs) contre-aimant 12a, 12b disposé dans le logement 10a, 10b correspondant du stator 3. Ainsi une sustentation magnétique du rotor 4 par rapport au stator 3 est induite lorsque le dispositif 1 de contrôle d'attitude est en microgravité, mais également lorsque le dispositif 1 de contrôle d'attitude est en gravité terrestre. Ainsi, le test du dispositif 1 au sol est possible.

Par exemple, la plage autorisée de mouvement le long de l'axe A21 de rotation pour le rotor 4 est telle que, sur Terre (i.e. sous 1 g) et lorsque le dispositif est disposé de sorte que l'axe A21 est vertical, la suspension magnétique du rotor 4 par rapport au stator 3 liée à la paire aimant 11a, 11b / contre-aimant 12a, 12b se trouvant dans la partie supérieure du dispositif 1 a un effet négligeable sur l'axe 8 de pivot. De même, en orbite (i.e. sous zéro-g ou en microgravité), les deux suspensions liées au deux paires aimant 11a, 11b / contre-aimant 12a, 12b ont un effet négligeable sur l'axe 8 de pivot lorsque ce dernier est à mi-chemin de sa plage de mouvement autorisée en translation le long de l'axe A21, ce qui rend le frottement encore plus faible.

Dans d'autres exemples de réalisation, le rotor 4 et le stator 3 ne sont pas équipés de telles paires aimant 11a, 11b / contre-aimant 12a. Les frictions sont par exemple réduites via des moyens mécaniques du type roulements à billes ou matériaux réduisant les frottements.

De retour aux [Fig.4a], la [Fig.4b] et la [Fig.4c], le dispositif 1 de contrôle de vitesse angulaire doit résister aux charges de lancement sans aucun mécanisme de serrage, le rotor 4 étant libre de se déplacer à tout moment. Cependant, afin de minimiser les frottements, une tolérance mécanique non nulle est nécessaire entre le rotor 4 et le stator 3. Potentiellement, il peut y avoir un jeu mécanique entre le rotor 4 et le stator 3 lorsque le rotor 4 atteint les extrémités de sa plage de mouvement autorisée en translation et en rotation. L'axe 8 de pivot et les paires aimant 11a, 11b / contre-aimant 12a, 12b ne sont pas nécessairement conçus pour supporter le poids du rotor 4 ni les chocs.

Pour adresser cette problématique, le dispositif 1 de contrôle de vitesse angulaire comprend ici des moyens de maintien à distance des zones aimantées respectives du stator 3 et du rotor 4, i.e. les zones dans lesquelles sont implémentées les paires aimant 11a, 11b / contre-aimant 12a, 12b. Les moyens de maintien à distance en question sont agencés pour résister à des efforts aussi bien au décollage qu'au largage, et ceci pour les 3 translations possibles entre le rotor 4 et le stator 3 (les 3 translations en question sont indiquées par les flèches en pointillé sur les [Fig.4a], [Fig.4b] et [Fig.4c]).

Selon le présent exemple de réalisation, les moyens de maintien à distance comprennent une bague 15 du rotor 4 et un épaulement 16 du stator 3. La bague 15 est destinée à coopérer avec l'épaulement 16 disposé à distance et en vis-à-vis de la bague 15 selon une direction axiale et selon une direction radiale. Plus particulièrement, l'épaulement 16 est disposé de façon à garantir une distance minimale entre les zones aimantées respectives du stator 3 et du rotor 4.

Dans d'autres exemples de réalisation, plusieurs bagues sont implémentées sur le rotor 4. Les bagues en question sont configurées pour coopérer avec des épaulements correspondants du stator 3.

Dans d'autres exemples de réalisation, d'autres formes de moyens de maintien à distance sont considérées. Par exemple, la (ou les) bague peut être implémentée sur le stator 3 et l'épaulement (ou les épaulements) correspondant sont implémentés sur le rotor 4.

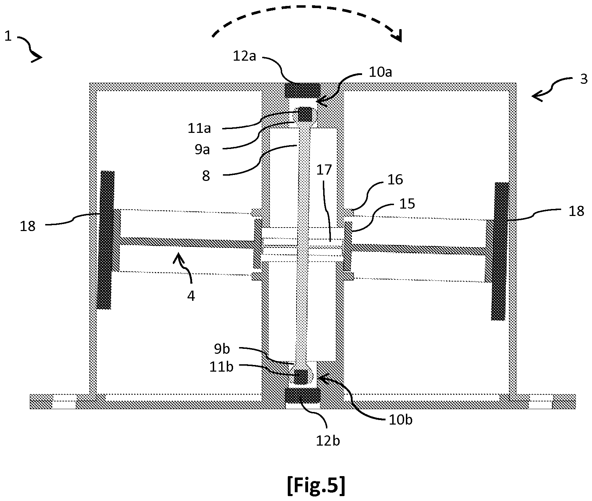

On présente désormais, en relation avec la **[Fig.5]** un dispositif 1 de contrôle de vitesse angulaire équipé un diaphragme 17 flexible selon un autre exemple de réalisation de l'invention.

Plus particulièrement, la bague 15 du rotor 4 est mécaniquement reliée à l'axe 8 de pivot par le diaphragme 17. Le diaphragme 17 est configuré pour que, lorsqu'un mouvement de bascule tendant à faire dévier l'axe 8 de pivot est imprimé au rotor 4 (mouvement de bascule symbolisé par la flèche en pointillé sur la [Fig.5]) :

- dans un premier temps, chacune des deux extrémités de l'axe 8 de pivot vient dans une position d'appui contre une paroi du logement 10a, 10b correspondant du stator 3 alors que le diaphragme 17 reste non-fléchi ; puis

- dans un second temps, les deux extrémités de l'axe 8 de pivot restant dans la position d'appui, la flexion du diaphragme 17 amène la bague 15 et les épaulements 16 à venir en butée pour bloquer le mouvement de bascule du rotor 4 dans une position garantissant un espace minimum entre les aimants 18 de freinage et le stator 3.

Ainsi, lors d'un tel mouvement de bascule, le rotor 4 est empêché de toucher le stator 3 tout en garantissant que l'axe 8 de pivot n'ait pas à supporter la contrainte mécanique permettant de bloquer le mouvement de bascule en question.

On présente désormais, en relation avec la **[Fig.6]** un modèle simplifié du dispositif 1 de contrôle de vitesse angulaire selon un exemple de réalisation de l'invention.

Plus particulièrement, un tel modèle permet d'estimer la constante de temps de dérotation d'un engin spatial auquel serait fixé un dispositif de contrôle de vitesse angulaire selon la présente technique.

Comme hypothèse simplificatrice, on considère ici un aimant 18 de freinage avec une longueur b suffisamment grande par rapport à sa largeur a qu'il peut être considéré comme infini. L'aimant 18 de freinage est logé radialement à la périphérie d'un rotor 4 cylindrique de longueur infinie le long de son axe (axe y) et de rayon $R$. L'aimant 18 de freinage se déplace à une distance supposée infinitésimale $\varepsilon$ (= entrefer) d'un boîtier métallique cylindrique, également de longueur infinie le long de l'axe du cylindre, modélisant le stator 3.

L'aimant 18 est magnétisé radialement et sa hauteur $h$ le long de la direction radiale est suffisamment grande par rapport à sa largeur pour qu'il puisse également être considéré comme infini. En raison de la hauteur infinie de l'aimant 18, le champ magnétique $B$ généré par l'aimant 18 à sa surface se rapproche de la valeur asymptotique, caractérisée par la rémanence, $Br$, du matériau :

[Math.1]

$$B \simeq \frac{B_r}{2}$$

Selon un tel modèle à une dimension, le champ électrique et les courants ont des composantes non nulles uniquement le long de l'axe y. Cela simplifie l'analyse, car la loi de Maxwell-Faraday :

[Math.2]

$$\nabla \times E = -\frac{\partial B}{\partial t}$$

se réduit à une seule équation différentielle :

[Math.3]

$$\frac{\partial E_y}{\partial x} = -\frac{\partial B_z}{\partial t} = -\frac{\partial B_z}{\partial x} R\omega$$

avec R le rayon du cylindre et $\omega$ la vitesse angulaire de rotation du cylindre autour de son axe. Comme le champ électrique et le champ magnétique sont nuls à l'infini, l'intégration selon x de l'équation [Math.3] est simple. Il en résulte que le champ électrique axial est proportionnel au champ magnétique radial selon la relation suivante :

[Math.4]

$$E_y = -B \cdot R\omega = -\frac{B_r}{2} \cdot R\omega$$

La puissance électrique $P$ dissipée par unité de volume V du boîtier du stator 3 (en considérant un matériau de résistivité $P$) pour un seul aimant 18 est alors :

[Math.5]

$$\frac{dP}{dV} = \frac{1}{\rho} \cdot E_y^2 = \frac{B_r^2}{4\rho} \cdot R^2\omega^2$$

Afin d'obtenir la puissance électrique $P$ totale dissipée, la relation précédente doit être intégrée sur le volume où se produit le phénomène, supposé être $e \times a \times b$ (où e est l'épaisseur du boîtier du stator 3, $a$ est la largeur de l'aimant dans la direction tangentielle, $b$ est la longueur réelle et finie de l'aimant le long de y). On obtient ainsi :

[Math.6]

$$P = \frac{B_r^2}{4\rho} \cdot eab \cdot R^2\omega^2$$

Lorsque l'on considère un rotor 4 avec $n$ aimants 18 de freinage, la puissance totale dissipée est supposée proportionnelle à $n$ (en supposant que les aimants 18 n'interagissent pas entre eux). Lorsque le stator 3 est entrainé par l'engin 2 spatial à stabiliser et que le rotor reste orienté selon le champ magnétique terrestre, la puissance électrique P totale dissipée correspond en fait à une perte d'énergie cinétique du satellite $\dot{E} = I\omega\dot{\omega}$; avec / l'inertie de l'engin 2 spatial à stabiliser autour de l'axe du cylindre. On obtient ainsi :

[Math.7]

$$nP = I\omega\dot{\omega} = \frac{B_r^2}{4\rho} \cdot neab \cdot R^2\omega^2$$

A partir de la relation précédente on peut déduire une constante de temps $\tau$ pour la décroissance exponentielle de la vitesse angulaire :

[Math.8]

$$\tau = \frac{\omega}{\dot{\omega}} = \frac{4\rho I}{B_r^2 R^2 \cdot neab}$$

A titre d'exemple, une constante de temps $\tau$ de 28 jours est obtenue pour les valeurs suivantes des paramètres de l'équation [Math.8] :

- Nombre d'aimants 18, $n$ : 8 ;
- largeur d'un aimant 18 dans la direction tangentielle, $a$ : 3 mm ;
- longueur réelle de l'aimant le long de $y$, $b$ : 15 mm ;

- épaisseur du boîtier du stator 3, e : 1 mm ;
- résistivité du matériau, $\rho$ : 2,7×10$^{-8}$ Ω.m;
- rayon du rotor 4, $R$ : 2,5 cm ;
- rémanence d'un aimant, $Br$ : 1 T ; et
- inertie de l'engin 2 spatial à stabiliser autour de l'axe du cylindre, $I$ : 5000 kg.m$^2$.

On présente désormais, en relation avec la [Fig.7] un engin 2 spatial équipé de deux dispositifs 1 de contrôle de vitesse angulaire selon un exemple de réalisation de l'invention.

Plus particulièrement, le stator 3 de chaque dispositif 1 est fixé à l'engin 2 spatial de sorte à être entrainé par l'engin 2 spatial. Le rotor 4 de chaque dispositif 1 s'oriente selon le champ 5 magnétique terrestre.

Selon le présent exemple de réalisation, deux dispositifs 1 de contrôle de vitesse angulaire sont implémentés dans l'engin spatial 2 à stabiliser lorsqu'il est hors service. En effet, un dispositif 1 de contrôle de vitesse angulaire selon la présente technique ne peut théoriquement pas amortir des vitesses angulaires normales à son axe. Cependant, un engin 2 spatial hors service va naturellement tendre à suivre un mouvement de rotation autour de son axe principal d'inertie maximale. Ainsi, si un tel dispositif 1 de contrôle de vitesse angulaire n'est pas implanté de sorte à avoir son axe A21 de rotation strictement perpendiculaire à l'axe principal d'inertie maximale, on peut s'attendre à observer des taux de rotation angulaires résiduels.

Ainsi, si un seul dispositif 1 de contrôle de vitesse angulaire est suffisant en théorie pour amortir la rotation de l'engin 2 spatial autour des 3 axes d'inertie, il peut être intéressant en pratique d'implémenter deux ou trois dispositifs 1 de contrôle de vitesse angulaire à des fins de redondance.

Cependant, dans d'autres exemples de réalisation, l'engin 2 spatial est équipé d'un seul dispositif 1 de contrôle de vitesse angulaire.

Dans certains exemples de réalisation, l'axe A21 de rotation du rotor 4 du (ou des) dispositif 1 de contrôle de vitesse angulaire forme un angle inférieur ou égal à 45° avec l'axe de plus grande inertie de l'engin 2 spatial (axe dénoté « $I_{max}$ » dans la [Fig.7]), tel que l'engin 2 spatial hors service tende vers un mouvement de rotation autour de cet axe de plus grande inertie. En effet, la rotation de l'engin 2 spatial va tendre naturellement vers une rotation autour de son axe de plus grande inertie (phénomène dit de « flat spin » selon la terminologie anglo-saxonne). Ainsi, une disposition selon laquelle le ou les axes A21 de rotation du ou des rotors 4 du ou des dispositifs 1 de contrôle de vitesse angulaire forment un angle inférieur ou égal à 45° avec l'axe de plus grande inertie de l'engin 2 spatial permet de garantir une dissipation de l'énergie cinétique de rotation de l'engin 2 spatial autour de son axe de plus grande inertie ayant pour conséquence de freiner la rotation de l'engin spatial.

L'engin 2 spatial en activité comprend en outre des moyens de contrôle d'attitude selon trois axes adaptés à stabiliser l'attitude de l'engin spatial en activité. Le ou les dispositifs 1 de contrôle de vitesse angulaire agissent simultanément aux moyens de contrôle d'attitude de l'engin spatial en activité mais exercent une action négligeable par rapport à ces moyens de contrôle d'attitude de l'engin spatial en activité.

De la sorte, le ou les dispositifs 1 de contrôle de vitesse angulaire ont un effet négligeable sur le contrôle d'attitude de l'engin 2 spatial lorsque celui-ci est en activité, mais permettent de contrôler la vitesse angulaire de l'engin spatial 2 lorsque ce dernier est hors service.

## Revendications

1. Dispositif (1) de contrôle de vitesse angulaire d'un engin (2) spatial hors service permettant de faciliter les opérations de retrait actif de l'engin spatial en tant que débris spatial, comprenant un stator (3) et un rotor (4) mobile selon un axe (A21) de rotation par rapport au stator, le stator (3) étant destiné à être entrainé par l'engin (2) spatial à stabiliser, le rotor (4) étant destiné à s'orienter selon le champ (5) magnétique terrestre,

   où le stator (3) comprend un corps (6) électriquement conducteur et non-ferromagnétique tandis que le rotor (4) comprend un système aimanté (7) configuré pour induire, dans le stator (3), des courants de Foucault de freinage d'un mouvement relatif du rotor (4) par rapport au stator (3).

2. Dispositif (1) de contrôle de vitesse angulaire selon la revendication 1, dans lequel le rotor (4) est guidé dans au moins un logement (10a, 10b) du stator (3), le rotor comprenant au moins un aimant (11a, 11b) coopérant avec au moins un contre-aimant (12a, 12b) disposé dans ledit logement du stator, de sorte à induire une sustentation magnétique du rotor (4) par rapport au stator (3) lorsque le dispositif (1) de contrôle d'attitude est en microgravité et également lorsque le dispositif (1) de contrôle d'attitude est en gravité terrestre.

3. Dispositif (1) de contrôle de vitesse angulaire selon la revendication 1 ou 2, comprenant des moyens de maintien à distance de zones aimantées respectives du stator et du rotor, les moyens de maintien à distance étant agencés pour résister à des efforts au décollage et au largage.

4. Dispositif (1) de contrôle de vitesse angulaire selon la revendication 3, dans lequel les moyens de maintien à distance comprennent au moins une bague (15) du rotor et un épaulement (16) du stator (3), ladite bague étant destinée à coopérer avec ledit épaulement (16) disposé à distance et en vis-à-vis de ladite bague (15) selon une direction axiale et selon une direction radiale, ledit épaulement (16) étant disposé de façon à garantir une distance minimale entre les zones aimantées respectives du stator et du rotor.

5. Dispositif (1) de contrôle de vitesse angulaire selon la revendication 4, dans lequel le rotor comprend des parties constituant un axe (8) de pivot et un diaphragme (17) flexible, ladite bague (15) du rotor étant mécaniquement reliée à l'axe (8) de pivot par le diaphragme (17).

6. Dispositif (1) de contrôle de vitesse angulaire selon l'une des revendications 1 à 5, dans lequel le système aimanté comprend une pluralité d'aimants (18a, 18b, 18c, 18d) de freinage disposés selon un plan (P20) perpendiculaire à l'axe (A21) de rotation du rotor.

7. Dispositif (1) de contrôle de vitesse angulaire selon la revendication 6, dans lequel les moments magnétiques (M22a, M22b) des aimants de freinage se somment selon une composante non nulle dans ledit plan perpendiculaire à l'axe de rotation du rotor de façon à ce que les aimants de freinage permettent également une orientation du rotor selon le champ magnétique terrestre.

8. Dispositif (1) de contrôle de vitesse angulaire selon la revendication 6 ou 7, dans lequel les moments magnétiques de plusieurs des aimants de freinage sont sensiblement perpendiculaires audit plan perpendiculaire à l'axe de rotation du rotor, de façon à ce que leur champ magnétique traverse ledit plan perpendiculaire à l'axe de rotation du rotor pour induire des courants de Foucault dans au moins deux zones du corps du stator situées en regard de part et d'autre dudit plan perpendiculaire à l'axe de rotation du rotor.

9. Dispositif (1) de contrôle de vitesse angulaire selon l'une des revendications 6 à 8, dans lequel les moments magnétiques de plusieurs des aimants de freinage forment un angle oblique par rapport audit plan perpendiculaire à l'axe de rotation du rotor.

10. Engin (2) spatial comprenant au moins un dispositif (1) de contrôle de vitesse angulaire selon l'une des revendications 1 à 9.

11. Engin (2) spatial selon la revendication précédente, comprenant en outre des moyens de contrôle d'attitude selon trois axes adaptés à stabiliser l'attitude de l'engin spatial en activité, ledit dispositif (1) de contrôle de vitesse angulaire agissant simultanément aux moyens de contrôle d'attitude de l'engin spatial en activité et exerçant une action négligeable par rapport à ces moyens de contrôle d'attitude de l'engin spatial en activité.

12. Engin (2) spatial selon la revendication 10 ou 11, dans lequel ledit dispositif (1) de contrôle de vitesse angulaire est agencé de façon à ce que l'axe de rotation du rotor forme un angle inférieur ou égal à 45° avec un axe de plus grande inertie de l'engin spatial, tel que l'engin spatial hors service tende vers un mouvement de rotation autour de cet axe de plus grande inertie.

**Patentansprüche**

1. Gerät (1) zur Kontrolle der Winkelgeschwindigkeit eines außer Dienst gestellten Raumfahrzeugs (2), das es ermöglicht, die Operationen zur aktiven Entfernung des Raumfahrzeugs als Weltraumschrott zu erleichtern, umfassend einen Stator (3) und einen Rotor (4), der entlang einer Drehachse (A21) in Bezug auf den Stator beweglich ist, wobei der Stator (3) dazu bestimmt ist, von dem zu stabilisierenden Raumfahrzeug (2) angetrieben zu werden, wobei der Rotor (4) dazu bestimmt ist, sich gemäß dem Erdmagnetfeld (5) auszurichten, wobei der Stator (3) einen elektrisch leitenden und nicht ferromagnetischen Körper (6) umfasst, während der Rotor (4) ein Magnetsystem (7) umfasst, das konfiguriert ist, um im Stator (3) Wirbelströme zum Bremsen einer Relativbewegung des Rotors (4) in Bezug auf den Stator (3) zu induzieren.

2. Gerät (1) zur Kontrolle der Winkelgeschwindigkeit nach Anspruch 1, wobei der Rotor (4) in mindestens einer Aufnahme (10a, 10b) des Stators (3) geführt wird, wobei der Rotor mindestens einen Magneten (11a, 11b) umfasst, der mit mindestens einem Gegenmagneten (12a, 12b) zusammenwirkt, der in der Aufnahme des Stators angeordnet ist, sodass ein magnetischer Auftrieb des Rotors (4) in Bezug auf den Stator (3) induziert wird, wenn sich das Gerät (1) zur Lagekontrolle in der Mikrogravitation befindet, und auch, wenn sich das Gerät (1) zur Lagekontrolle in der Erdgravitation befindet.

3. Gerät (1) zur Kontrolle der Winkelgeschwindigkeit nach Anspruch 1 oder 2, umfassend Mittel zum Fernhalten von jeweiligen magnetisierten Zonen des Stators und des Rotors, wobei die Mittel zum Fernhalten so angeordnet sind, dass sie Belastungen beim Start und beim Abwurf standhalten.

4. Gerät (1) zur Kontrolle der Winkelgeschwindigkeit nach Anspruch 3, wobei die Mittel zum Fernhalten mindestens einen Ring (15) des Rotors und eine Schulter (16) des Stators (3) umfassen, wobei der Ring dazu bestimmt ist, mit der Schulter (16) zusammenzuwirken, die in einem Abstand und gegenüber dem Ring (15) in einer axialen Richtung und in einer radialen Richtung angeordnet ist, wobei die Schulter (16) so angeordnet ist, dass sie einen Mindestabstand zwischen den jeweiligen magnetisierten Zonen des Stators und des Rotors gewährleistet.

5. Gerät (1) zur Kontrolle der Winkelgeschwindigkeit nach Anspruch 4, wobei der Rotor Teile umfasst, die eine Schwenkachse (8) und eine flexible Blende (17) bilden, wobei der Ring (15) des Rotors durch die Blende (17) mechanisch mit der Schwenkachse (8) verbunden ist.

6. Gerät (1) zur Kontrolle der Winkelgeschwindigkeit nach einem der Ansprüche 1 bis 5, wobei das Magnetsystem eine Vielzahl von Magneten (18a, 18b, 18c, 18d) zur Bremsung umfasst, die in einer Ebene (P20) angeordnet sind, die senkrecht zur Drehachse (A21) des Rotors verläuft.

7. Gerät (1) zur Kontrolle der Winkelgeschwindigkeit nach Anspruch 6, wobei die magnetischen Momente (M22a, M22b) der Bremsmagnete in der Ebene senkrecht zur Drehachse des Rotors mit einer von Null verschiedenen Komponente aufgehen, sodass die Bremsmagnete auch eine Ausrichtung des Rotors gemäß dem Erdmagnetfeld ermöglichen.

8. Gerät (1) zur Kontrolle der Winkelgeschwindigkeit nach Anspruch 6 oder 7, wobei die magnetischen Momente mehrerer der Bremsmagnete im Wesentlichen senkrecht zu der Ebene senkrecht zur Drehachse des Rotors sind, sodass ihr Magnetfeld die Ebene senkrecht zur Drehachse des Rotors durchquert, um Wirbelströme in mindestens zwei Zonen des Statorkörpers zu induzieren, die sich auf beiden Seiten der Ebene senkrecht zur Drehachse des Rotors gegenüberliegen.

9. Gerät (1) zur Kontrolle der Winkelgeschwindigkeit nach einem der Ansprüche 6 bis 8, wobei die magnetischen Momente mehrerer der Bremsmagnete einen schiefen Winkel in Bezug auf die Ebene bilden, die senkrecht zur Drehachse des Rotors verläuft.

10. Raumfahrzeug (2), umfassend mindestens ein Gerät (1) zur Kontrolle der Winkelgeschwindigkeit nach einem der Ansprüche 1 bis 9.

11. Raumfahrzeug (2) nach dem vorstehenden Anspruch, ferner umfassend Mittel zur Lagekontrolle in drei Achsen, die geeignet sind, die Lage des aktiven Raumfahrzeugs zu stabilisieren, wobei das Gerät (1) zur Kontrolle der Winkelgeschwindigkeit gleichzeitig mit den Mitteln zur Lagekontrolle des aktiven Raumfahrzeugs wirkt und eine vernachlässigbare Wirkung in Bezug auf diese Mittel zur Lagekontrolle des aktiven Raumfahrzeugs ausübt.

12. Raumfahrzeug (2) nach Anspruch 10 oder 11, wobei das Gerät (1) zur Kontrolle der Winkelgeschwindigkeit so angeordnet ist, dass die Drehachse des Rotors einen Winkel von 45° oder weniger mit einer Achse der größten Trägheit des Raumfahrzeugs bildet, sodass das außer Betrieb befindliche Raumfahrzeug zu einer Drehbewegung um diese Achse der größten Trägheit tendiert.

**Claims**

1. Device (1) for controlling the angular velocity of an out-of-service spacecraft (2) making it possible to facilitate the operations of active removal of the spacecraft as space debris, comprising a stator (3) and a rotor (4) able to move on a rotation axis (A21) with respect to the stator, the stator (3) being intended to be driven by the spacecraft (2) to be stabilized, the rotor (4) being intended to orient itself along the terrestrial magnetic field (5),
where the stator (3) comprises an electrically conductive non-ferromagnetic body (6) while the rotor (4) comprises a magnetized system (7) configured to induce, in the stator (3), eddy currents for braking a relative movement of the rotor (4) with respect to the stator (3).

2. Angular-velocity control device (1) according to claim 1, wherein the rotor (4) is guided in at least one housing (10a, 10b) in the stator (3), the rotor comprising at least one magnet (11a, 11b) cooperating with at least one counter-magnet (12a, 12b) disposed in said housing in the stator, so as to cause a magnetic levitation of the rotor (4) with respect to the stator (3) when the attitude control device (1) is in microgravity and also when the attitude control device (1) is in terrestrial gravity.

3. Angular-velocity control device (1) according to claim 1 or 2, comprising means for maintaining respective magnetized zones of the stator and of the rotor at a distance, the distance-maintaining means being arranged to withstand forces at takeoff and at jettison.

4. Angular-velocity control device (1) according to claim 3, wherein the distance-maintaining means comprise at least one ring (15) of the rotor and a shoulder (16) of the stator (3), said ring being intended to cooperate with said shoulder (16) disposed at a distance and facing said ring (15) in an axial direction and in a radial direction, said shoulder (16) being disposed so as to guarantee a minimum distance between the respective magnetized zones of the stator and of the rotor.

5. Angular-velocity control device (1) according to claim 4, wherein the rotor comprises parts constituting a pivot axis (8) and a flexible diaphragm (17), said ring (15) of the rotor being mechanically connected to the pivot axis (8) by the diaphragm (17).

6. Angular-velocity control device (1) according to one of claims 1 to 5, wherein the magnetized system comprises a plurality of braking magnets (18a, 18b, 18c, 18d) disposed along a plane (P20) perpendicular to the rotation axis (A21) of the rotor.

7. Angular-velocity control device (1) according to claim 6, wherein the magnetic moments (M22a, M22b) of the braking magnets are added together in a non-zero component in said plane perpendicular to the rotation axis of the rotor so that the braking magnets also enable the rotor to be oriented along the terrestrial magnetic field.

8. Angular-velocity control device (1) according to claim 6 or 7, wherein the magnetic moments of several of the braking magnets are substantially perpendicular to said plane perpendicular to the rotation axis of the rotor, so that their magnetic field passes through said plane perpendicular to the rotation axis of the rotor to induce eddy currents in at least two zones of the stator body located facing on either side of said plane perpendicular to the rotation axis of the rotor.

9. Angular-velocity control device (1) according to one of claims 6 to 8, wherein the magnetic moments of several of the braking magnets form an oblique angle with respect to said plane perpendicular to the rotation axis of the rotor.

10. Spacecraft (2) comprising at least one angular-velocity control device (1) according to one of claims 1 to 9.

11. Spacecraft (2) according to the preceding claim, further comprising means for controlling attitude on three axes adapted to stabilize the attitude of the spacecraft in activity, said angular-velocity control device (1) acting simultaneously on the means for controlling the attitude of the spacecraft in activity and exerting a negligible action with respect to these means for controlling the attitude of the spacecraft in activity.

12. Spacecraft (2) according to claim 10 or 11, wherein said angular-velocity control device (1) is arranged so that the rotation axis of the rotor forms an angle of less than or equal to 45° with a greatest-inertia axis of the spacecraft, so that the out-of-service spacecraft tends towards a rotation movement about this greatest-inertia axis.

**[Fig.1]**

**[Fig.2]**

**[Fig.3a]**

**[Fig.3b]**

**[Fig.7]**

**[Fig.4a]**

**[Fig.4b]**

**[Fig.4c]**

**[Fig.6]**

[Fig.5]

## RÉFÉRENCES CITÉES DANS LA DESCRIPTION

**Documents brevets cités dans la description**

- EP 2746163 A
- EP 2671804 A
- EP 3538441 A
- EP 0087628 A
- US 3526795 A
- US 6191513 B
- US 4062509 A